# EUROPÄISCHE PATENTANMELDUNG

(11) **EP 2 626 326 A1**
(43) Veröffentlichungstag der Anmeldung: **14.08.2013**
(21) Anmeldenummer: 13000225.6
(22) Anmeldetag: 16.01.2013
(51) Int. Cl.: B66D 3/18, B66C 13/06, B66C 13/18, G01L 1/22

(54) **Bedieneinrichtung**

(30) Priorität: 10.02.2012 DE 102012002501
(71) Anmelder: Rinke Handling-Systems GmbH, 34355 Staufenberg (DE)
(72) Erfinder: Rinke, Otto, 34355 Staufenberg (DE)
(74) Vertreter: Walther, Walther & Hinz GbR

(57) **Zusammenfassung**

Bedieneinrichtung eines Lastenhebezeugs mit einer Antriebseinrichtung, die durch die Bedieneinrichtung ansteuerbar ist, wobei die Bedieneinrichtung mindestens einen Kraftmessgeber aufweist, wobei der Kraftmessgeber durch ein Betätigungselement aktivierbar ist, wobei durch das Betätigungselement entsprechend der auf das Betätigungselement aufgebrachten manuellen Kraft ein Steuersignal an die Antriebseinrichtung zur Einleitung einer Hebe- oder Senkbewegung übermittelt wird, wobei der Kraftmessgeber als Biegebalken mit mindestens einem Dehnungsmessstreifen ausgebildet ist, wobei der Biegebalken durch das Betätigungselement auslenkbar ist.

## Beschreibung

Die Erfindung betrifft eine Bedieneinrichtung eines Lastenhebezeugs mit einer Antriebseinrichtung, die durch die Bedieneinrichtung ansteuerbar ist, wobei die Bedieneinrichtung mindestens einen Kraftmessgeber aufweist, wobei der Kraftmessgeber durch ein Betätigungselement aktivierbar ist, wobei durch das Betätigungselement entsprechend der auf das Betätigungselement aufgebrachten manuellen Kraft ein Steuersignal an die Antriebseinrichtung zur Einleitung einer Hebe- oder Senkbewegung übermittelt wird.

Eine Vorrichtung der eingangs genannten Art ist aus der EP 0 262 134 B1 bekannt. Die Funktionsweise eines solchen Lastenhebezeugs stellt sich wie folgt dar:
Das Lastenhebezeug weist ein Lastaufnahmeglied auf, wobei an dem Lastaufnahmeglied an seinem freien Ende ein zu manipulierendes Gewicht angeordnet ist. Das Lastaufnahmeglied zeigt einen Griff, der relativ zu dem Lastaufnahmeglied verschieblich ist. Zwischen Griff und Lastaufnahmeglied befinden sich zwei Kraftmessgeber. Das Lastaufnahmeglied weist an seinem oberen Ende ein Seil auf, das mit der Antriebseinrichtung in Verbindung steht. Die Antriebseinrichtung selbst umfasst einen Elektromotor, gegebenenfalls ein Getriebe, an dem eine Seiltrommel für das Seil an dem Lastaufnahmeglied angeordnet ist. Wie bereits ausgeführt, ist der Griff relativ zu dem Lastaufnahmeglied verschieblich, steht mit diesem allerdings über die beiden Kraftmessgeber in Verbindung. Soll die Last, die an dem Lastaufnahmeglied nunmehr anliegt, angehoben werden, dann wird der Griff leicht nach oben geschoben. Die Folge hiervon ist, dass durch den einen Kraftmessgeber ein Steuersignal für die Antriebseinrichtung generiert wird. Durch dieses Steuersignal wird der Elektromotor aktiviert, wodurch die an dem Lastaufnahmeglied angeordnete Last angehoben wird. Zum Senken der Last wird entsprechend vorgegangen; d. h., dass durch nach unten Ziehen des Griffelementes wiederum ein Steuersignal durch den anderen Kraftmessgeber generiert wird, das eine Senkbewegung des Seiles bewirkt.

Aus dem Stand der Technik ist bekannt, die beiden Kraftmessgeber als piezoelektrische Kristalle auszubilden. Ein Nachteil piezoelektrischer Kristalle als Sensoren besteht in ihrer schlechten Eignung für den Einsatz bei rein statischen Messungen. Eine statische Kraft führt zu einer definierten Ladungsmenge an der Oberfläche des piezoelektrischen Materials. Diese Ladung kann nur durch einen aufwendigen Ladungsverstärker ausgewertet werden. Ein weiterer störender Effekt bei der Verwendung üblicher Sensorkabel ist die Ladungsverschiebung bei kleinsten mechanischen Veränderungen der Kabel als Folge des triboelektrischen Effekts (Reibungselektrizität, statische Aufladung durch Umwelteinflüsse). Aufgrund der hohen Impedanz der Verstärkerschaltung sind die Sensorkabel empfindlich gegen elektrische Felder.

Die der Erfindung zugrunde liegende Aufgabe besteht darin, die Bedieneinrichtung eines Lastenhebezeugs störanfällig zu gestalten.

Zur Lösung der Aufgabe wird erfindungsgemäß vorgeschlagen, dass der Kraftmessgeber als Biegebalken mit mindestens einem Dehnungsmessstreifen ausgebildet ist, wobei der Biegebalken durch das Betätigungselement auslenkbar ist. Dehnungsmessstreifen haben gegenüber Piezokristallen den großen Vorteil, dass das Signal konstant bleibt. Bei Verwendung von Piezokristallen als Kraftmessgeber ist dies nicht gewährleistet. Es wurde bereits darauf hingewiesen, dass eine statische Kraft bei einem Piezokristall zur einer definierten Ladungsmenge an der Oberfläche des piezoelektrischen Materials führt. Hierbei gilt grundsätzlich, dass wenn diese Ladung nicht mit einem Ladungsverstärker sondern mit einem Impedanzwandler gemessen wird, kontinuierlich Ladungen verloren gehen, was letztlich zu einem kontinuierlichen Signalabfall führt. Es entsteht insofern ein sägezahnförmiger Verlauf des Steuersignales. Um einen solchen sägezahnförmigen Verlauf des Steuersignales auszugleichen, sind relativ komplizierte elektrische Schaltungen erforderlich.

Dehnungsmessstreifen haben gegenüber Piezokristallen den großen Vorteil, dass das Signal, wie bereits ausgeführt, konstant bleibt. Das bedeutet aber auch, dass die Schaltungselektronik niederohmig ausgeführt werden kann. Es reicht somit der Einsatz einfacher Verstärkerschaltungen aus. Auch die elektrische Störsicherheit ist insofern sehr hoch.

Vorteilhafte Merkmale und Ausgestaltungen der Erfindung ergeben sich aus den Unteransprüchen.

So ist insbesondere vorgesehen, dass das Lastenhebezeug ein Lastaufnahmeglied aufweist. Unter dem Lastaufnahmeglied wird das Teil verstanden, an dem schlussendlich die Last angehängt ist, und dass mit der Antriebseinrichtung über beispielsweise ein Zugseil mit Seilrolle in Verbindung steht.

Als besonders vorteilhaft hat sich herausgestellt, wenn das Betätigungselement als hülsenförmiges Griffelement ausgebildet ist, wobei das Lastaufnahmeglied in dem hülsenförmigen Griffelement verläuft. Hieraus wird deutlich, dass das Griffelement in einer Ebene mit dem Lastaufnahmeglied verläuft, was eine intuitive Handhabung der Bedieneinrichtung insgesamt erleichtert. In diesem Zusammenhang ist im Einzelnen des Weiteren vorgesehen, dass das hülsenförmige Griffelement relativ zu dem Lastaufnahmeglied verschieblich durch das Lastaufnahmeglied aufgenommen ist. Insbesondere hierdurch wird eine intuitive Steuerung bei der Manipulation der Last, die an dem Lastaufnahmeglied angehängt ist, möglich, und zwar dadurch, dass das Griffelement entweder nach oben zum Anheben der Last oder nach unten zum Absenken der Last verschoben wird.

Eine besonders vorteilhafte Ausführungsform zeichnet sich dadurch aus, dass im Bereich des Griffelementes an dem Lastaufnahmeglied ein Träger angeordnet ist, wobei der Biegebalken mit einem Ende an dem Träger starr angeordnet ist, wobei das andere Ende des Biegebalkens mit dem Griffelement vertikal beweglich in Verbindung steht. Der Träger selbst ist am Lastaufnahmeglied angeordnet. Hieraus wird deutlich, dass bei vertikaler Auslenkung des Griffelementes der Biegebalken an seinem einen Ende, nämlich an seinem freien Ende minimal ausgelenkt wird, mit der Folge, dass der auf dem Biegebalken angeordnete Dehnungsmessstreifen verformt wird, mit der weiteren Folge, dass ein Signal abgegeben wird, das mittels einer Verstärkerschaltung den Elektromotor der Antriebseinrichtung als Steuerungssignal übermittelt wird. Damit kann eine nahezu weglose Krafteinleitung erfolgen, was eine sehr feinfühlige Handhabung ermöglicht. Auch ist der Verschleiß der Bedieneinrichtung aufgrund der nahezu weglosen Krafteinleitung im Wesentlichen vernachlässigbar.

Im Einzelnen weist des Weiteren das Griffelement im Übergang zum Träger einen Teller auf, der durch einen Stift mit dem anderen Ende des Biegebalkens in Verbindung steht. Das heißt, der Stift stellt das Übertragungsglied zwischen dem Griffelement einerseits und dem Biegebalken dar, der am anderen Ende eingespannt ist.

Als besonders vorteilhaft hat sich eine Ausbildung des Biegebalkens herausgestellt, bei dem der Biegebalken mindestens vier Gelenke aufweist, die durch sogenannte Dünnstellen außerhalb des Dehnungsstreifens im Biegebalken gebildet sind. Wenn vier Dünnstellen in der Anordnung eines Rechtecks oder Quadrats im Biegebalken angeordnet sind, also jeweils zwei Dünnstellen einander gegenüberliegen, ergibt sich hieraus ein sogenanntes Gelenkviereck.

Die Einbringung der Dünnstellen im Biegebalken wird dadurch vorgenommen, dass eine Ausnehmung in Form einer liegenden "8" im Biegebalken geschaffen wird. Das heißt, die Ausnehmung ist im Wesentlichen aus zwei Bohrungen ausgebildet, die ineinandergreifen, also die Bohrungen untereinander verbunden sind. Im Bereich der oberen und unteren Scheitelpunkte befinden sich als Dünnstellen die jeweiligen Gelenke, insgesamt also vier Gelenke, die das Gelenkviereck bilden. Das heißt, dort wo der Biegebalken den geringsten Querschnitt aufweist, wird der DMS angeordnet. Über den Dünnstellen befindet sich der Dehnungsmessstreifen (DMS). Ein solches Gelenkviereck hat den Vorteil, dass egal wie die Kraft zur Auslenkung des Biegebalkens angreift, dies aufgrund der parallelen Führung durch das Gelenkviereck keine Auswirkung auf die Größe der Auslenkung des Biegebalkens hat.

Im vorliegenden Falle bedeutet dies Folgendes: Das Griffelement ist hülsenförmig ausgebildet. Das hülsenförmig ausgebildete Griffelement wird durch das Lastaufnahmeglied mit seitlichem Spiel geführt. Das bedeutet, dass die Richtung der Krafteinleitung auf den Biegebalken am anderen Ende des Biegebalkens durch beispielsweise Verschwenken des Griffes sich ändert. Dadurch nun, dass die vier Dünnstellen als Gelenke in den Biegebalken eingebracht sind, wird ein durch eine Änderung der Richtung der Krafteinleitung in den Biegebalken erzeugtes Moment kompensiert. Dies führt schlussendlich dazu, dass die Bedieneinrichtung insgesamt, egal wie der Kraftangriff auf den Biegebalken ist, im Wesentlichen immer in gleicher Weise reagiert, also die Steuersignale bei gleicher Kraft aber z. B. unterschiedlicher Angriffsrichtung zu einer im Wesentlichen immer gleichen Hub- oder Senkbewegung führt.

Es wurde bereits darauf hingewiesen, dass unten an dem Lastaufnahmeglied die Last anhängt. Üblicherweise findet die Manipulation der Last über das Griffelement statt. Es kann aber nun der Fall eintreten, dass insbesondere bei fragilen Lasten die Manipulation der Last unmittelbar an der Last stattfindet. Das heißt konkret, dass durch Anheben oder Absenken der Last ein entsprechendes Steuersignal an den Elektromotor übermittelt werden soll. Um auch hier ein entsprechendes Steuersignal zu generieren, ist vorgesehen, dass das Lastaufnahmeglied eine Dehnungsmesszelle oder auch Wiegezelle aufweist, wobei solche Dehnungsmesszellen oder Wiegezellen mit bestimmten Kraftbereichen käuflich zu erwerben sind. Die Dehnungsmesszelle ist insbesondere außerhalb des Griffes in direktem Kraftfluss an dem Lastaufnahmeglied angeordnet, d. h., dass die Dehnungsmesszelle Teil des Lastaufnahmegliedes ist und insbesondere zwischen dem Lastaufnahmeglied und dem Seil angeordnet ist, das auf die Seiltrommel auf oder von der Seiltrommel abgewickelt wird.

Nach einem weiteren Merkmal der Erfindung ist vorgesehen, dass das Lastaufnahmeglied einen Griff aufweist. Der Griff kann hierbei Teil des Lastaufnahmegliedes sein. Vorteilhaft ist jedoch vorgesehen, dass der Griff unterhalb und beabstandet zum Griffelement am Lastaufnahmeglied angeordnet ist. Dieser starr am Griff am Lastaufnahmeglied angeordnete Griff ermöglicht die Manipulation der Bedieneinrichtung in horizontaler Richtung. Das heißt, der Griff steht mit dem Biegebalken nicht in Verbindung.

Um Ungenauigkeiten durch Materialkriechen und andere Effekte zu kompensieren, ist vorgesehen, die Bedieneinrichtung in bestimmten zeitlichen Abständen "auf Null" abzugleichen.

Anhand der Zeichnungen wird die Erfindung nachstehend näher erläutert.
- Fig. 1: zeigt das Lastenhebezeug in einer Seitenansicht in einer schematischen Darstellung;
- Fig. 2: zeigt die Einzelheit "X" aus Fig. 1 in vergrößerter Darstellung;
- Fig. 3: zeigt den Biegebalken in vergrößerter Darstellung;
- Fig. 4: zeigt ein Ersatzschaubild des Biegebalkens.

Das Lastenhebezeug ist insgesamt mit 1 bezeichnet. Das Lastenhebezeug 1 umfasst eine Antriebseinrichtung 10 mit einem Elektromotor 11, einem an dem Elektromotor angeflanschten Getriebe 12, wobei das Getriebe 12 eine Seilrolle 13 zeigt. Durch Rechts-/Linkslauf wird das Seil 15 von der Seilrolle ab oder auf die Seilrolle aufgewickelt. Mit dem Seil 15 ist die sogenannte Bedieneinrichtung 20 durch die Anschlaghülse 25 verbunden.

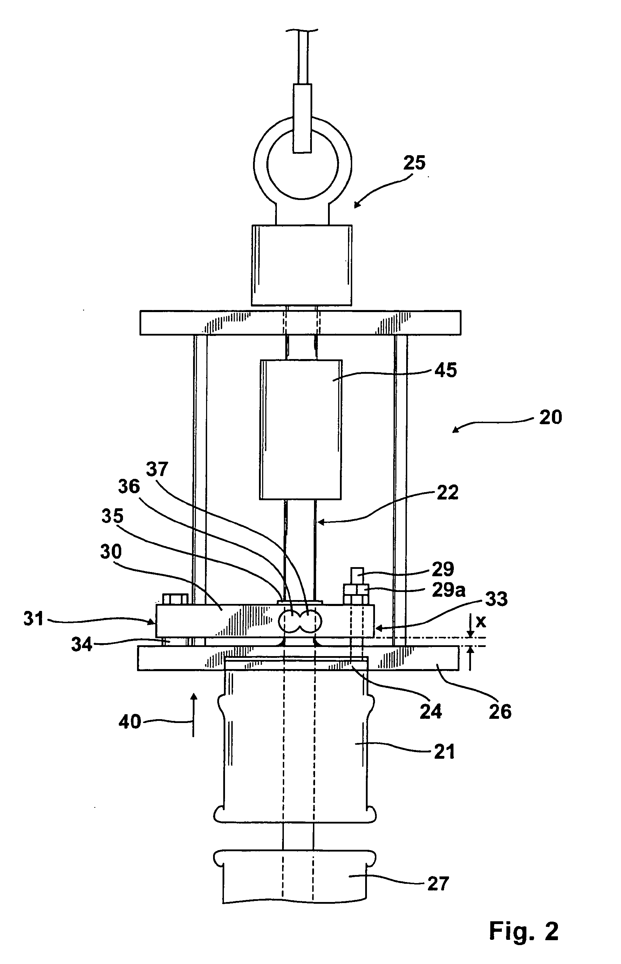

Die Bedieneinrichtung 20, so ergibt sich aus Fig. 2, umfasst das Griffelement 21, wobei das Griffelement als Hülse ausgebildet ist, und verschieblich relativ zu dem Lastaufnahmeglied 22 am Lastaufnahmeglied angeordnet ist. Demgegenüber ist der darunter befindliche Griff 27 fest oder starr am Lastaufnahmeglied 22 befestigt. Es weist einen Abstand zum Griffelement 21 auf, um die Verschieblichkeit zu gewährleisten. Der Griff 27 dient der Manipulation in horizontaler Richtung.

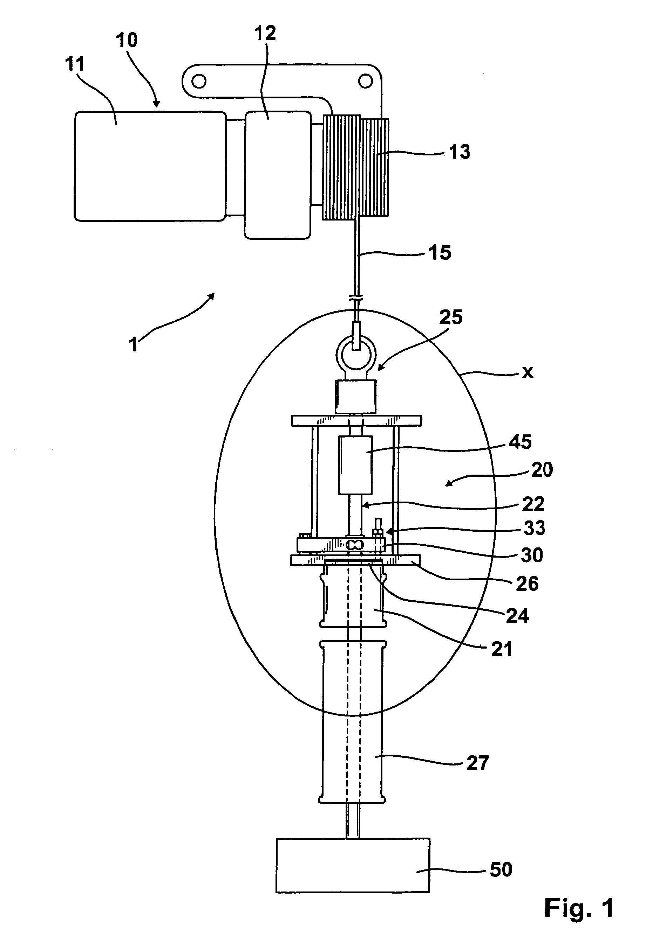

Das Lastaufnahmeglied 22 zeigt an seinem unteren Ende die insgesamt mit 50 bezeichnete Last. Demzufolge ragt das Lastaufnahmeglied 22 durch das hülsenförmige Griffelement 22 hindurch, wie sich dies unmittelbar in Anschauung von Fig. 1 aber auch von Fig. 2 ergibt. Auf der oberen Stirnseite des Griffelementes 21 befindet sich der mit 24 bezeichnete Teller. Der Teller 24 ist relativ zum Träger 26 beweglich, wobei auf dem Träger 26 der Biegebalken 30 örtlich vor dem Lastaufnahmeglied 22 lagert. Der Biegebalken 30 ist an seinem einen Ende (Pfeil 31) mit dem Träger 26 starr derart verbunden, dass der Biegebalken mit seinem anderen Ende (Pfeil 33) ausgelenkt werden kann. Das heißt, dass der Biegebalken an seinem einen Ende (Pfeil 31) durch eine Schraube mit dem Träger 26 verbunden ist, wobei sich zwischen Biegebalken und Träger beispielsweise eine Unterlegscheibe 34 befindet. Der Teller 24 besitzt einen Gewindestift 29, wobei der Gewindestift 29 mit dem Biegebalken in dem durch den Pfeil 33 gekennzeichneten Bereich verbunden ist. Der Biegebalken weist in seinem Ausgangszustand einen Abstand X zu der Oberseite des Trägers 26 auf (Fig. 2). Durch die Schrauben 29a auf dem Gewindestift 29 des Trägers ist der Biegebalken 30 gegenüber dem Träger vorgespannt. Der Träger 26 selbst ist mit dem Lastaufnahmeglied verbunden. Wird nun das Griffelement 21 nach oben verschoben, also in Richtung des Pfeiles 40, dann wird der Biegebalken etwas entlastet, da der Gewindestift 29 ebenfalls in Richtung des Pfeiles 40 bewegt wird, der - wie bereits ausgeführt - über den Teller 24 mit dem Griffelement 21 verbunden ist. Umgekehrt wird dann, wenn das Griffelement entgegen der Richtung des Pfeils 40 verschoben wird, der Biegebalken höher beansprucht. In beiden Fällen erzeugt der Dehnungsmessstreifen 35 auf der Oberseite des Biegebalkens 30 ein Signal, das als Steuersignal über eine Verstärkerschaltung an den Elektromotor 11 übermittelt wird, und dort zu einer rotatorischen Bewegung mithin zu einem Auf- oder Abrollen des Seiles führt.

Hiermit kann somit über das Griffelement eine Manipulation der Last 50 stattfinden.

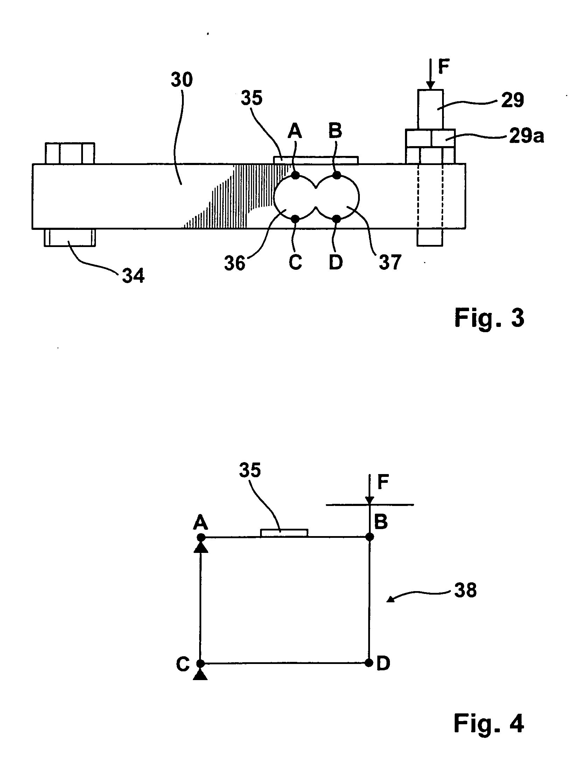

Wie bereits aus der Fig. 2 zu entnehmen ist, weist der Biegebalken zwei quer zur Längsachse des Biegebalkens unterhalb des Dehnungsmessstreifens 35 angeordnete, durchgehende Bohrungen auf, die ineinander übergehen, und insofern nach Art einer liegenden "8" ausgebildet sind. Die beiden Bohrungen verlaufen unterhalb des Dehnungsmessstreifens im Balken und außerhalb des Kraftangriffs durch den Gewindestift 29. Durch die beiden Bohrungen 36 und 37 findet eine Verjüngung des Querschnittes des Biegebalkens an vier Stellen A - D statt. Diese Stellen A - D werden auch als Dünnstellen bezeichnet. Diese Dünnstellen bilden jeweils ein Gelenk, sodass, wie sich dies aus Fig. 4 ergibt, vom Grundsatz her ein Gelenkviereck 38 gebildet wird. Hierbei ist es dann gleich, in welcher Weise die Kraft F durch den Gewindestift 29 auf dieses Gelenkviereck wirkt. Denn, wie bereits ausgeführt, wird ein Drehmoment, das dadurch realisiert wird, dass die Kraft F nicht genau in der Flucht von dem Gelenk B eingeleitet wird, durch das Gelenkviereck kompensiert. Der Dehnungsmessstreifen 35 befindet sich hierbei auf dem Biegebalken über den Dünnstellen A und B.

Das Lastaufnahmeglied 22 weist im Bereich des Übergangs zu der Anschlagshülse 25 eine Dehnungsmesszelle oder Wiegezelle 45 auf, die ebenfalls über eine Verstärkerschaltung mit dem Elektromotor 11 in Verbindung steht. Solche Dehnungsmesszellen sind käuflich zu erwerben. Wird nun die Last 50 angehoben, so wird, ganz ähnlich wie bei Verschieben des Griffelementes in Richtung des Pfeiles 40, ein entsprechendes Steuersignal an den Motor 11 übermittelt, der z. B. für ein Aufrollen des Seiles auf die Seilrolle 13 sorgt. Umgekehrt wird Seil nachgegeben, wenn die Last 50 nach unten bewegt werden soll. Unterhalb des Griffelements 21 befindet sich der Griff 27, der fest am Lastaufnahmeglied 22 befestigt ist und der Manipulation der Last in horizontaler Richtung dient.

### Bezugzeichenliste:

- 1: Lastenhebezeug
- 10: Antriebseinrichtung
- 11: Elektromotor
- 12: Getriebe
- 13: Seilrolle
- 15: Seil
- 20: Bedieneinrichtung
- 21: Griffelement
- 22: Lastaufnahmeglied
- 24: Teller
- 25: Anschlaghülse
- 26: Träger
- 27: Griff
- 29: Gewindestift
- 29a: Schrauben
- 30: Biegebalken
- 31: Pfeil
- 33: Pfeil
- 34: Unterlegscheibe
- 35: Dehnungsmessstreifen
- 36: Bohrung
- 37: Bohrung
- 38: Gelenkviereck
- 40: Pfeil
- 45: Wiegezelle (Dehnungsmesszelle)
- 50: Last
- A, B, C, D: Gelenke

## Patentansprüche

1. Bedieneinrichtung (20) eines Lastenhebezeugs (1) mit einer Antriebseinrichtung (10), die durch die Bedieneinrichtung ansteuerbar ist,
wobei die Bedieneinrichtung (20) mindestens einen Kraftmessgeber aufweist,
wobei der Kraftmessgeber durch ein Betätigungselement aktivierbar ist, wobei durch das Betätigungselement entsprechend der auf das Betätigungselement aufgebrachten manuellen Kraft ein Steuersignal an die Antriebseinrichtung (10) zur Einleitung einer Hebe- oder Senkbewegung übermittelt wird,
**dadurch gekennzeichnet,**
**dass** der Kraftmessgeber als Biegebalken (30) mit mindestens einem Dehnungsmessstreifen (35) ausgebildet ist, wobei der Biegebalken (30) durch das Betätigungselement auslenkbar ist.

2. Bedieneinrichtung (20) nach Anspruch 1,
**dadurch gekennzeichnet,**
**dass** das Lastenhebezeug (1) ein Lastaufnahmeglied (22) aufweist.

3. Bedieneinrichtung (20) nach Anspruch 2,
**dadurch gekennzeichnet,**
**dass** das Betätigungselement als hülsenförmiges Griffelement (21) ausgebildet ist, wobei das Lastaufnahmeglied (22) in dem hülsenförmigen Griffelement (21) verläuft.

4. Bedieneinrichtung (20) nach Anspruch 3,
**dadurch gekennzeichnet,**
**dass** das hülsenförmige Griffelement (21) relativ zu dem Lastaufnahmeglied (22) verschieblich durch das Lastaufnahmeglied aufgenommen ist.

5. Bedieneinrichtung (20) nach Anspruch 3 oder 4,
**dadurch gekennzeichnet,**
**dass** das Griffelement (21) im Übergang zum Träger (26) einen Teller (24) aufweist, der durch einen Gewindestift (29) mit dem anderen Ende des Biegebalkens (30) in Verbindung steht.

6. Bedieneinrichtung (20) nach einem der voranstehenden Ansprüche,
**dadurch gekennzeichnet,**
**dass** der Biegebalken mindestens vier Gelenke (A, B, C, D) aufweist, die durch Dünnstellen im Biegebalken (30) gebildet sind.

7. Bedieneinrichtung (20) nach Anspruch 6,
**dadurch gekennzeichnet,**
**dass** vier Dünnstellen in dem Biegebalken (30) vorgesehen sind, wobei jeweils zwei Dünnstellen einander gegenüberliegen, sodass sich ein Gelenkviereck (38) ergibt.

8. Bedieneinrichtung (20) nach einem der voranstehenden Ansprüche,
**dadurch gekennzeichnet,**
**dass** das Lastaufnahmeglied (22) eine Dehnungsmesszelle (45) aufweist.

9. Bedieneinrichtung (20) nach Anspruch 8,
**dadurch gekennzeichnet,**
**dass** die Dehnungsmesszelle (45) unabhängig vom Betätigungselement an dem Lastaufnahmeglied (22) angeordnet ist.

10. Bedieneinrichtung (20) nach Anspruch 8 oder 9,
**dadurch gekennzeichnet,**
**dass** die Dehnungsmesszelle (45) Teil des Lastaufnahmegliedes (22) ist.

11. Bedieneinrichtung nach einem der voranstehenden Ansprüche,
**dadurch gekennzeichnet,**
**dass** das Lastaufnahmeglied (22) einen Griff (27) aufweist.

12. Bedieneinrichtung (20) nach Anspruch 11,
**dadurch gekennzeichnet,**
**dass** der Griff (27) Teil des Lastaufnahmegliedes (22) ist.
